# EUROPEAN PATENT SPECIFICATION

(11) **EP 0 661 016 B1**
(45) Date of publication and mention of the grant of the patent: **29.07.1998**
(21) Application number: 93810899.0
(22) Date of filing: 22.12.1993
(51) Int. Cl.: A47B 88/00, F16B 12/46, F16B 5/06

(54) **An assembling structure for panels**
Struktur für den Zusammenbau von Platten
Structure pour l'assemblage de panneaux

(43) Date of publication of application: 05.07.1995
(73) Proprietor: Hsieh, Ming Lin, Tai-Chung City (TW)
(72) Inventor: Hsieh, Ming Lin, Tai-Chung City (TW)
(74) Representative: Feldmann, Clarence Paul

(56) References cited:
- EP-A- 0 012 030
- EP-A- 0 289 256
- US-A- 4 110 052

## Description

This invention relates to an assembling structure for panels, according to the preamble of the main claim.

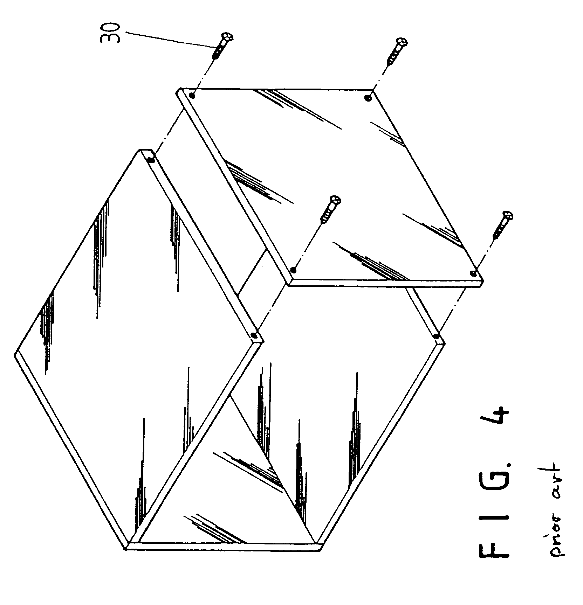

It has been found that the conventional way to join two wooden boards is simply achieved by nails (not shown) or screws 30 (see FIG. 4). However, it is difficult and time-consuming to disengage furniture made of the wooden boards joined together by screws 30 thereby making it inconvenient and almost impossible to disassemble the furniture. Hence, an integral plastic sheet 31 with a connecting edge 32 between every two panels and a plurality of flexible members 33 for joining the outer edges of the sheet 31 has been developed to eliminate the above-mentioned drawbacks. Nevertheless, such an integral plastic sheet 31 is large in size thereby making it difficult for transportation and in addition, the connecting edge 32 is easily broken after folding a few times.

EP-A-0 012 030 shows an assembling structure for panels with panels, formed with a plurality of chambers in the interior and with a plurality of holes in communication with said chambers, and with L-shaped edge racks having a plurality of tenons formed each with a protuberance on the end portion. While assembling the structure the tenons are pushed in the chambers until the protuberances are snapping in into the holes.

EP-A-0 289 256 shows a drawer made from assembling components. The corners of the drawer are made in a similar manner with tenons on edge racks and chambers in the panels. There are also similar snapping means foreseen. This document forms the basis for the preamble of the independent claim.

This invention relates to an assembling structure for panels.

It is the primary object of the present invention to provide an assembling structure for panels which can facilitate the connection between panels and can be disengaged.

It is another object of the present invention to provide an assembling structure for panels which is simple in construction.

It is still another object of the present invention to provide an assembling structure for panels which is easy to manufacture.

It is still another object of the present invention to provide an assembling stricture for panels by means of which the panels can be firmly joined together.

It is a further object of the present invention to provide an assembling structure for panels which is safe in use.

The solution is provided by the assembling structure defined in independent claim 1. A preferred embodiment is defined in dependent claim 2.

Other objects and merits and a fuller understanding of the present invention will be obtained by those having ordinary skill in the art when the following detailed description of the preferred embodiment is read in conjunction with the accompanying drawings wherein like numerals refer to like or similar parts.
FIG. 1 is an exploded view of the present invention;
FIG. 2 is a perspective view of the present invention;
FIG. 3 is a perspective view of the present invention;
FIG. 4 shows a conventional way to connect wooden boards constituting prior art; and

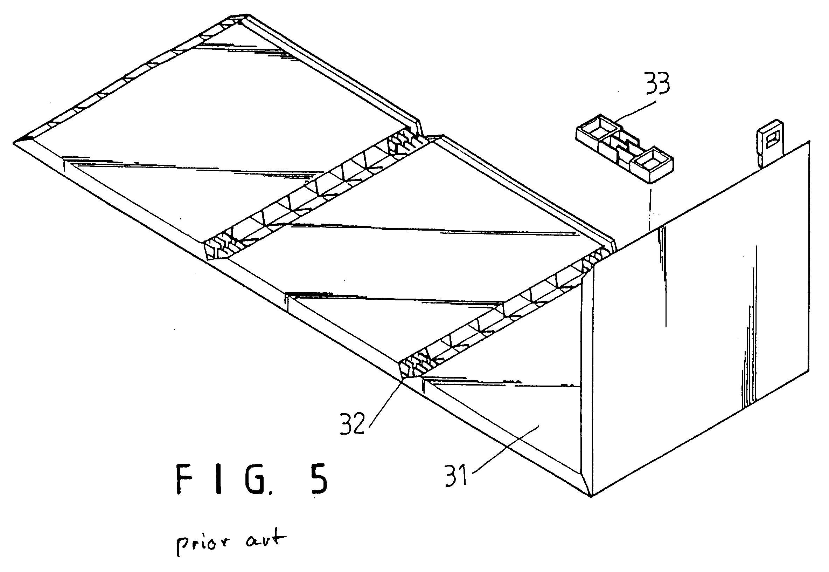

FIG. 5 shows a conventional prior art way to connect plastic boards.

For purpose of promoting an understanding of the principles of the invention, reference will now be made to the embodiment illustrated in the drawings. Specific language will be used to describe same. It will, nevertheless, be understood that no limitation of the scope of the invention is thereby intended, such alternations and further modifications in the illustrated device, and such further applications of the principles of the invention as illustrated herein being contemplated as would normally occur to one skilled in the art to which the invention relates.

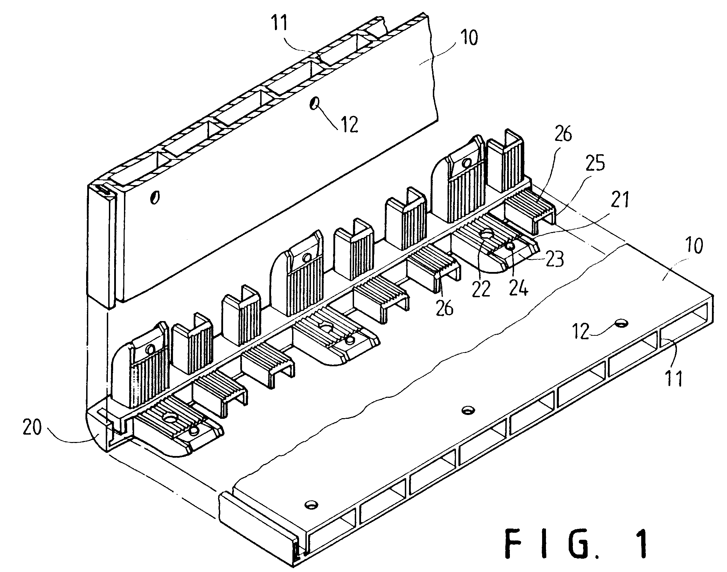

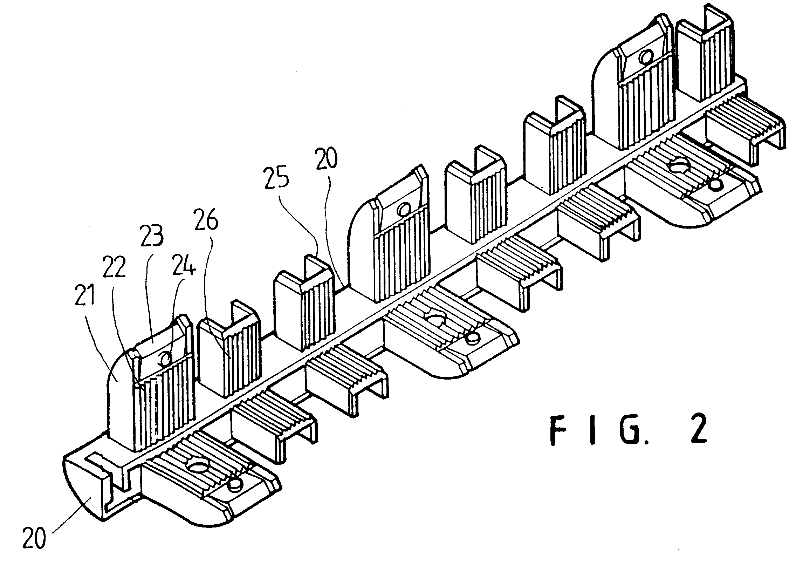

With reference to the drawings and in particular to FIGS. 1 and 2 thereof, the assembling structure for panels comprises a panel 10 and a L-shaped edge rack 20. The panel 10 is formed with a plurality of holes 12 on the top and a plurality of chambers 11 in the interior. A L-shaped edge rack 20 is designed to be fitted with an edge of the panel 10. The L-shaped edge rack 20 is provided with a plurality of main positioning tenons 21 extending horizontally from the vertical side of the L-shaped edge rack 20 and vertically from the top of the L-shaped edge rack 20. The main positioning tenon 21 is formed with a plurality of raised lines 22 on the top, an end portion 23, and a protuberance 24 on the end portion 23. The main positioning tenon 21 has the same height and width as the chamber 11 and the protuberance 24 is positioned so that when the main positioning tenon 21 of the L-shaped edge rack 20 is inserted into the chamber 11 of the panel 10, the protuberance 24 is just engaged with the hole 12 of the panel 10. Between every two main positioning tenons 21 there are a plurality of auxiliary positioning tenons 25 formed with a plurality of raised lines 26 on the top. The auxiliary positioning tenon 25 is aligned with a corresponding chamber 11 of the panel 10.

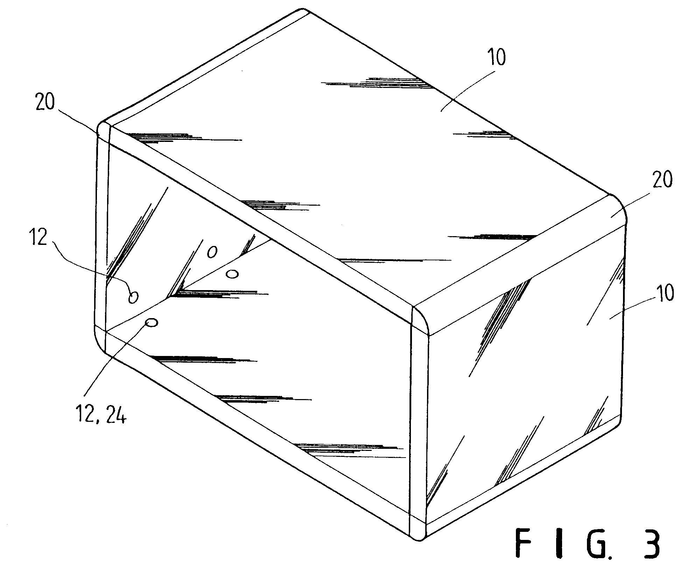

When in assembly, simply insert the L-shaped edge rack 20 in the edge of the panel 10, with the main positioning tenons 21 and the auxiliary positioning tenons 25 engaged with corresponding chambers 11 of the panel 10. In the meantime, the protuberance 24 of the main positioning tenons 21 is just engaged with the hole 12 of the panel 10, while the raised lines 22 and 26 of the main positioning tenons 21 and the auxiliary positioning tenons 25 are tightly engaged with the inner upper side of the chambers 11 of the panel 10. Hence, a piece of desired furniture can be conveniently assembled as shown in FIG. 3.

When desired to disengage the L-shaped edge rack 20 from the panel 10, it is only necessary to press the protuberance 24 and pull the panel 10 away from the L-shaped edge rack 20. Further, the outer side of the L-shaped edge rack 20 is formed with a curved surface thereby preventing it from hurting people.

The invention is naturally not limited in any sense to the particular features specified in the foregoing or to the details of the particular embodiment which has been chosen in order to illustrate the invention. Consideration can be given to all kinds of variants of the particular embodiment which has been described by way of example and of its constituent elements without thereby departing from the scope of the invention as defined in the claims. This invention accordingly includes all the means constituting technical equivalents of the means described as well as their combinations.

## Claims

1. An assembling structure for panels comprising: panels (10) formed with a plurality of chambers (11) in the interior and a plurality of holes (12) in communication with said chambers (11) and L-shaped edge racks (20) having a plurality of main positioning tenons (21) extending horizontally and vertically therefrom and the main positioning tenons (21) having an end portion (23) and a protuberance (24) on the end portion (23), being adapted to engage with the chambers (11) of said panels (10) so that said protuberance (24) is engaged with a corresponding one of the holes (12) of said panel (10) characterized in that the L-shaped edge racks (20) furthermore are having a plurality of auxiliary positioning tenons (25), being shorter than the main positioning tenons (25), and extending horizontally and vertically with respect to the L-shaped racks and being arranged in between every two main positioning tenons (21) on the L-shaped rack (20) and being adapted to engage with the chambers (11) of said panel (10) and furthermore the main positioning tenons (21) and the auxiliary positioning tenons (25) are formed with raised lines (22,26) on the top.

2. Assembling structure according claim 1, characterized in that the L-shaped edge rack (20) is formed with a curved outer surface.

## Patentansprüche

1. Elemente für den Zusammenbau von Platten, bestehend aus Platten (10), welche im Inneren eine Vielzahl von Kammern (11) aufweisen, die mit einer Vielzahl von Bohrungen (12) in Verbindung stehen sowie im Querschnitt L-förmige Eckstäbe (20) mit einer Vielzahl von horizontal und vertikal vorstehenden Haupt-Positionierungszapfen (21), die je einen Endteil (23) mit einem vorstehenden Noppen (24) aufweisen, wobei die Haupt-Positionierungszapfen dazu bestimmt sind, in die Kammern (11) der Platten eingeschoben zu werden, bis die Noppen (24) in die entsprechende Bohrung (12) der Platte (10) einrasten, dadurch gekennzeichnet, dass die im Querschnitt L-förmigen Eckstäbe (20) zusätzlich eine Vielzahl von Neben-Positionierungszapfen (25) aufweisen, welche kürzer sind als die Haupt-Positionierungszapfen (21) und jeweils zwischen zwei Haupt-Positionierungszapfen (21) angeordnet sind, und die horizontal und vertikal aus den im Querschnitt L-förmigen Leisten (20) vorstehen und die dazu bestimmt sind, in die Kammern (11) der Platte (10) eingeschoben zu werden, wobei sowohl die Haupt-Positionierungszapfen (21) als die Neben-Positionierungszapfen mit einer Riffelung (22, 26) auf der Oberseite versehen sind.

2. Struktur nach Patentanspruch 1, dadurch gekennzeichnet, dass die im Querschnitt L-förmige Leiste (20) an ihrer Aussenseite gerundet ist.

## Revendications

1. Structure d'assemblage pour des panneaux comprenant : des panneaux (10) formés avec une pluralité de chambres (11) à l'intérieur et une pluralité de trous (12) en communication avec lesdites chambres (11) et des cornières de bord en forme de L (20) ayant une pluralité de tenons de positionnement principaux (21) s'étendant horizontalement et verticalement à partir de celles-ci et les tenons de positionnement principaux (21) ayant une partie d'extrémité (23) et une protubérance (24) sur la partie d'extrémité (23), conçue pour s'engager dans les chambres (11) desdits panneaux (10) de sorte que ladite protubérance (24) est engagée dans un trou correspondant parmi les trous (12) dudit panneau (10), caractérisé en ce que les cornières de bord en forme de L (20) ont de plus une pluralité de tenons de positionnement auxiliaire (25) plus courts que les tenons de positionnement principaux (25), s'étendant horizontalement et verticalement par rapport aux cornières en forme de L et étant disposés entre chaque deux tenons de positionnement principaux (21) sur la cornière en forme de L (20) et étant conçus pour s'engager dans les chambres (11) dudit panneau (10) et en outre, les tenons de positionnement principaux (21) et les tenons de positionnement auxiliaires (25) sont formés avec des lignes surélevées (22, 26), au sommet.

2. Structure d'assemblage selon la revendication 1, caractérisé en ce que la cornière de bord en forme de L (20) est formée avec une surface externe incurvée.
